# EUROPEAN PATENT SPECIFICATION

(11) **EP 4 209 259 B1**
(45) Date of publication and mention of the grant of the patent: **26.02.2025**
(21) Application number: 22150756.9
(22) Date of filing: 10.01.2022
(51) Int. Cl.: B01D 50/20, H01M 10/42, B01D 53/70, B01D 53/72, F23G 7/06

(54) **SYSTEM FOR BATTERY TESTING WITH AN IGNITION DEVICE FOR EXHAUST GASSES**
SYSTEM ZUR BATTERIEPRÜFUNG MIT EINER ZÜNDVORRICHTUNG FÜR ABGASE
SYSTÈME DE TEST DE BATTERIE DOTÉ D'UN DISPOSITIF D'IGNITION POUR DES GAZ D'ÉCHAPPEMENT

(43) Date of publication of application: 12.07.2023
(73) Proprietor: Samsung SDI Co., Ltd., Yongin-si, Gyeonggi-do 17084 (KR)
(72) Inventor: Reinprecht, Wolfgang, 8144 Attendorf (AT); Reinprecht, Stefan, 8144 Attendorf (AT)
(74) Representative: Gulde & Partner

(56) References cited:
- CN-A- 103 743 868
- CN-A- 108 107 157
- CN-A- 113 883 540
- CN-U- 205 263 141

## Description

### Field of the Disclosure

The present disclosure relates to treating exhaust gases in systems for performing battery tests, such as thermal runaway tests for assessing the robustness of the battery, to mitigate the release of contaminated gases from the system.

### Technological Background

In recent years, vehicles for the transportation of goods and people have been developed using electric power as a source for motion. Such an electric vehicle is an automobile that is propelled by an electric motor, using energy stored in rechargeable batteries. An electric vehicle may be solely powered by batteries or maybe a form of a hybrid vehicle powered by for example a gasoline generator or a hydrogen fuel power cell. Furthermore, the vehicle may include a combination of an electric motor and a conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers, and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include the combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor, and other hydrocarbons. The vented gas is therefore burnable and potentially toxic. The vented gas also causes a gas-pressure increase inside the battery pack. In similar regards, publication CN108107157 relates to battery testing systems with sensors to monitor the presence of toxic gasses, and publication CN 113883540 relates to methods for the treatment of organic waste gas through oxygen-enriched combustion.

To mitigate the risk for thermal runaway or to assure a desired robustness of the battery, batteries undergo tests in which they are exposed to potentially damaging conditions, such as high or low temperatures, mechanical forces, mechanical damage, and the like.

### Summary of Invention

The invention is defined by the appended claims. The description that follows is subjected to this limitation. Any disclosure lying outside the scope of said claims is only intended for illustrative as well as comparative purposes.

During battery testing batteries can release contaminated gases, for example, due to overpressure buildup during a thermal runaway process. One objective of the battery testing system is to prevent/mitigate the release of such contaminated exhaust gases to an environment outside the battery system. To achieve this objective, air filters are used to capture contaminants in the exhaust gasses prior to releasing them outside the system. However, certain burnable gasses are more difficult to filter in conventional means and could be released from the testing systems.

There is thus a need for methods, devices, and systems for preventing or mitigating the release of burnable gasses generated during battery testing to the environment of the testing facility.

According to one aspect of the present disclosure, a battery testing system is provided, the system includes a test chamber, a battery test platform positioned within the battery test chamber, the battery test platform is configured to accommodate a battery under test and to facilitate performing a battery test, and at least one ignition device configured to affect combustion of exhaust gases produced in the test chamber during the battery test, while the exhaust gasses are in the testing system, wherein at least one wall of the test chamber comprises a grid wall and the battery testing system further comprises a fire-resistant screen covering at least part of the grid wall from an outer side thereof.

Yet another aspect of the present disclosure refers to a method for exhaust gas treatment in a battery testing system as defined above. The method includes the steps of: introducing a battery (20) under test in a test chamber (510), performing a battery test procedure on the battery under test, igniting exhaust gases produced during the battery test procedure to affect combustion thereof, guiding the combusted gases through a filter, and filtering pollutants from the guided combusted gases, wherein at least one wall (530, 531) of the test chamber (510) comprises a grid wall and the test chamber (510) comprises a fire-resistant screen (520, 521) covering at least part of the grid wall from an outer side thereof.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1 illustrates a schematic functional view of a gas treatment device including an ignition device and a cyclone filter, according to an embodiment.
Fig. 2 illustrates a schematic functional view of a gas treatment device including an ignition device, a cyclone filter, and a fine particle filter, according to an embodiment.
Fig. 3 illustrates a schematic functional view of a gas treatment device including an ignition device, a cyclone filter, and a combustion barrier, according to an embodiment.
Fig. 4 illustrates a schematic functional view of a gas treatment device including an ignition device, a cyclone filter, a fine particle filter, and a combustion barrier, according to an embodiment.
Fig. 5 illustrates a schematic functional view of a battery test setting with a gas treatment device placed on a test platform, according to an embodiment.
Fig. 6 illustrates a schematic functional view of a battery test setting with a gas treatment device placed on a test platform, wherein the cyclone filter is spaced apart from the ignition device, according to an embodiment.
Fig. 7 illustrates a schematic functional view of a hood structure, according to an embodiment.
Fig. 8 illustrates a schematic cross-section of a hood structure, according to an embodiment.
Fig. 9 illustrates a schematic functional view of a hood structure with a safety flap under a normal operation of a vent, according to an embodiment.
Fig. 10 illustrates a schematic functional view of a hood structure with a safety flap under a faulty operation of a vent, according to an embodiment.
Fig. 11 illustrates a schematic view of a battery testing system, according to an embodiment.
Fig. 12 illustrates a schematic view of a battery testing facility, according to an embodiment.

### Detailed Description of the Invention

Reference will now be made in detail to embodiments, examples of which are illustrated in the accompanying drawings. Effects and features of the exemplary embodiments and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

During battery testing, burnable gases, such as gasses including H₂, CO, and/or CₓHₓ particles, can be exhausted from the battery under test. As common filters may not be effective in absorbing/filtering these gases, they could be introduced to the environment and result in polluted, and potentially dangerous, air.

According to one aspect of the present disclosure, an exhaust gas treatment device is provided. The gas treatment device is operable in a test chamber for battery testing for treating exhaust gasses in the test chamber. The gas treatment device includes at least one ignition device, configured to affect the combustion of exhaust gases produced in the test chamber during a battery test, while the exhaust gasses are in the test chamber.

Correspondently, in some embodiments, a battery testing system includes a test chamber, a battery test platform, and at least one ignition device. Specifically, the battery test platform is positioned within the battery test chamber and is configured to accommodate a battery under test and to facilitate performing a battery test, and the at least one ignition device is configured to affect the combustion of exhaust gases produced in the test chamber during the battery test, while the exhaust gasses are in the testing system.

Advantageously, affecting combustion of exhaust cases burns the burnable gases, which results in safe particles, such as H₂O and CO₂, and larger particle ash, which could be filtered from the burned exhaust gasses before the gasses are released to the environment.

In other words, the exhaust gases, which can include burnable gases, are ignited by the ignition device before being released into the environment. The burned exhaust gasses can be less harmful to the environment, especially when the debris of the burned materials is filtered.

The battery, as used herein, is a device under test, or a battery under test, where certain test procedures are performed with the battery to assure a robustness thereof and/or compliance with certain standards, such as battery performance tests under ISO 12405-1 or GB 18384-2020. One test that can be performed on the battery is a thermal propagation test.

One objective of the present disclosure is to lower emissions related to battery testing while maintaining safe testing procedures.

To facilitate performing a test on a battery, a test platform is used for accommodating the battery under test. In some embodiments, the test platform includes sensors, such as temperature sensors, VOC sensors, or the like. in some embodiments, the test platform includes test equipment or facilitates access to test equipment, for affecting certain conditions on the battery under test.

The conditions affected during testing include one or more of mechanical forces, air pressure, temperature, exposure to certain materials, and the like.

The test equipment can further include cooling or preheating stumuli of the device under test as well as electric or mechanical force and loads with the relevant sensors during the thermal runaway event.

A mechechanical condition, which forms a part of a mechanical induced thermal runway test, includes a mechanical impact, which produces the conditions for a crush test.

The testing of a battery can result in exhausting contaminated gasses, excessive heat, fire, and even explosion. As the energy density of batteries increases, the risk for combustion, explosion, and excessive heat could increase.

Therefore, tests for batteries are preferably performed in a controlled environment, such as a test chamber, where the risks associated with the test procedures could be mitigated. The test chamber is designed to reduce the risk of intruding contaminants, such as contaminated gasses, hazardous metals, or other chemicals, related to the test procedure to the environment.

One of the potentially contaminating factors in a test procedure is burnable gasses, which, according to the present disclosure, are burned with an ignition device to reduce the risk of their release to the environment.

According to some embodiments, the ignition device is configured to affect the combustion of burnable gasses by inducing high-temperature conditions to the burnable gasses. In some embodiments, the ignition device induces high-temperature conditions by providing plasma, such as a spark. The ignition device can be electrically operated. One example of an ignition device is a glow-pin or a spark device, which generates a spark by delivering electric/ionic current between two separated electrodes, such that the spark is generated in the space between the electrodes.

According to some embodiments, the ignition device operates continuously, for example, by providing a continuous current and creating a continuous spark. Alternatively, the ignition device is operated intermittently, for example in pulses, where sparks are generated recurrently at a certain fixed or controllable rate/frequency, thereby determining a frequency of ignition.

According to some embodiments, the ignition rate, corresponding to the frequency of ignition, is in the range of 0.1 sparks per second to 100 sparks per second. In preferable embodiments, the ignition rate is in a range of 1 spark per second to 10 sparks per second.

In some embodiments, the intensity of the ignition is controllable. For example, the spark intensity is controllably reduced or increased.

According to some embodiments, the ignition device is operable in one or more of the following operation modes:
- No ignition, where the ignition device does not induce combustion.
- Low-mode, where the ignition device operates at a rate and/or intensity below a certain threshold.
- High-mode, where the ignition device operates at a rate and/or intensity above a certain threshold.

According to some embodiments, the operation mode of the ignition device, the intensity, and/or the frequency of ignition are controllably determined based on a determined condition in the test chamber. Such conditions can include a phase/step in the testing procedure, temperature measurement in the test chamber, detection of burnable gases in the test chamber, and the like.

According to some embodiments, the ignition device includes a spark plug device, which produces an electric high voltage spark by applying the required energy to ignite the mixture of exhaust gasses. Alternatively, a high-temperature ignition element, such as a high temperature metallic or ceramic element are included in the ignition device, that affects ignition by the presence of heat. In a preferred embodiment, the ignition device includes an arcing device, such as a spark device, as the arc affects significantly increased temperatures, which would result in an effective ignition.

In some embodiments, the exhaust gas treatment device or system further includes at least one filter configured for removing contaminants from gasses passing therethrough, and a vent configured to direct the exhaust gasses through the filter, affecting a directed air stream wherein a downstream direction is a direction in which air is guided through the filter. The at least one filter is preferably placed downstream of the at least one ignition device, such that the at least one ignition device is configured to affect the combustion of exhaust gases prior to the exhaust gases being directed through the at least one filter.

Correspondently, a method for exhaust gas treatment in a battery testing system is provided. The method includes performing a battery test procedure on a battery under test, igniting exhaust gases produced during the battery test procedure to affect combustion thereof, guiding the combusted gases through a filter, and filtering pollutants/contaminants from the guided combusted gases.

Advantageously, the vent creates a directed gas flow in which the exhaust gases released from the battery are directed to the vicinity of the ignition device to be combusted, thereafter, the directed gas flow directs the burned exhaust gasses through a filter for removing contaminating particles from the burned exhaust gasses.

As used herein, the term vent relates to an apparatus configured to affect a movement of air in a certain direction or flow. A vent can include a fan can be any revolving vane, or vanes used for producing currents of air, such as blades, axially rotatable to affect the movement of air to create a flow of air or air currents. A vent can be any one of an axial-flow vent, a centrifugal vent, a cross-flow vent, or the like.

According to some embodiments, a flow rate of a vent is in the range of 100 m³/h to 10000 m³/h. In some embodiments, the flow rate of a vent is greater than 1000 m³/h. In some embodiments, the flow rate of a vent is approximately 1800 m³/h. In some embodiments, the flow rate of a vent is approximately 3600 m³/h or greater than 3000 m³/h.

Based on the maximum size of the battery system, or battery under test, the amount of pass-through volume is provided to provide gases with temperatures below a certain threshold, according to the requirement of the filtering system. In a preferable embodiment, the vent type is a centrifugal system as it provides tolerance to different loads of the exhaust gas flow. Axial vents (ATEX) are preferably used in areas where the exhaust gases are not yet ignited as well as support for emergency cases.

According to some embodiments, the vent is operated to affect a gas flow in a certain direction or path. According to some embodiments, the device or system further includes gas flow guidance elements, such as plates, flaps, conduits, inlets, and the like, wherein, in combination with the operation of the fan, the gas flow is directed or confined in a certain path.

As used herein, the adjacency relation between two components is determined such that gas is directed, under the operation of the vent, from one component to the other. For example, the operation of the vent affects under-pressure, which sucks gas through one component and affects an under pressure by an inlet section of the respective component, such that, gas from an adjacent component is pulled into the inlet section.

As used herein, the term filter refers to an apparatus configured for removing particles, such as solid particles from ais passing there through. Particularly, a filter operates for removing particles by means of adsorption, absorption, and/or separation, and is configured to remove particles based on the properties of the filtered particles. Properties of filtered particles, based on which the filter removes them from the gasses, include one or more of:
- Size/dimensions of the particles
- Weight of the particles
- The density of the particles
- Chemical properties of the particles, such as reactivity to certain materials
- Electrical properties of the particle

According to some embodiments, the filter includes a porous or fibrous medium that removes solid particles from the air by absorption or adsorption. Such filters are made of one or more of paper, foam, cotton, cloth, stainless steel, or the like.

According to some embodiments, the filter is a centrifugal filter, such as a cyclone filter, configured to separate particles from gasses passing therethrough by means of differential mechanical forces resulting, for example, from affecting a vortex to the air. According to some embodiments, the filter can include one or more of a settling chamber, baffle chamber, a single-cyclone separator, or a multiple-cyclone separator.

According to some embodiment, a filter can be a large-particle filter or referred to as a coarse filter, or a fine-particle filter, such as a fine filter, a semi HEPA filter, a HEPA filter, or a ULPA filter.

According to some embodiments, a large-particle filter is configured to filter particles larger than 10µm.

According to some embodiments, a fine-particle filter is configured to filter particles larger than 1µm.

According to some embodiments, within the test chamber, where the venting gas is ignited, large parts of the device under test are mixed with the exhaust gasses, and these will be primarily filtered by the cyclone filter system, which is configured to filter most of the large particle passing therethrough. Advantageously, the cyclone filter is easy to service. The fine dust filter, generally, requires more frequent service and could require replacement after a small amount of dust is accumulated therein, for example, in the range of 400g. Therefore, according to some embodiments, the fine dust filter receives exhaust gases with a contaminant particle size of less than 10um, as larger contaminants particles are filtered by the cyclone filter.

Further cyclone filters can be made preferred of steel and can withstand much higher temperatures in worst case up to 1000°C thus combustion flames can reach into it.

According to an embodiment, the at least one large-particle filter is placed adjacent to and downstream of the at least one ignition device. Preferably, filter large-particle filter is a cyclone filter placed adjacent to and downstream of the at least one ignition device.

The cyclone filter, or cyclone separator, is configured for removing particulates from air through vortex separation, with or without the use of filtration membranes. Particularly, a gas cyclone is used, which rotates the gas, and the rotational effects and gravity are used to separate large or heavy particles from the gas.

According to some embodiments, the vortex is created by the airflow affected by the operation of one or more of the vents.

Advantageously, a large-particle filter, such as a cyclone filter, is operable with high-temperature gasses passing therethrough.

According to some embodiments, the large-particle filter is operable with gas temperatures in the range of 100 to 1000 degrees Celsius. Particularly, a large-particle filter can be operable with gas temperatures of approximately 130 degrees Celsius.

According to an embodiment, the system or device further includes a fine-particle filter placed downstream of the large-particle filter, such as the cyclone filter, which is configured to filter contaminants from exhaust gasses that passed through the large-particle filter.

Advantageously, placing the fine-particle filter downstream of the large-particle filter reduces the average contaminant particles size in the gas introduced to the fine-particle, thereby mitigating the risk of clogging and could reduce the frequency of maintenance operations, such as cleaning or replacement, of the fine-particle filter.

According to some embodiments, the fine-particle filter and the large-particle filter are placed adjacent to one another and/or are connected through a conduit, such that the gas passing through the large-particle filter is directed/forced through the fine-particle filter. Alternatively, the fine-particle filter and the large-particle filter are spaced apart in the test chamber, thereby allowing for the introduction of clean gases to be mixed with the exhaust gasses prior to being guided through the fine-particle filter.

In other words, according to some embodiments, the large-particle filter is a primary filter, through which the gas passes first, and the fine-particle filter is a secondary filter, through which gas passes after passing through the primary filter.

According to some embodiments, the device or system further includes at least one of a first air inlet, configured to introduce non-exhaust gases to the exhaust gases prior to the combustion, and/or a second air inlet between the at least one ignition device and the filter, configured to introduce non-exhaust gases to exhaust gases after the combustion thereof and prior to the combusted exhaust gases being directed through the at least one filter.

As used herein, the term inlet refers to a structure that allows the introduction of gas there through from one region to another region on both sides of the inlet. An inlet can be an opening, such as a hole, an aperture, a crack, a slit, an orifice or the like, in a conduit, cavity, container, passage, or the like, facilitating an intake/outtake of gas therethrough.

If the concentration of burnable gases being ignited is high, the combustion might not be effective and burnable gases could still be unburned and pass through the device or system. Advantageously, the first air inlet introduces non-exhaust gases to be missed with the exhaust gases released from the battery under test, such that a mixed gas is introduced to the ignition device to facilitate efficient combustion of the exhaust gasses.

The combustion can increase the temperature of the exhaust gasses significantly, which might affect the operation or effectiveness of one of more of the filters. Advantageously, the second inlet is configured to introduce non-exhaust gases to the burned exhaust gases, thereby reducing the temperature of the exhaust gases being introduced to one or more of the filters placed downstream of the combustion.

According to some embodiments, non-exhaust gas is introduced via one or more of the inlets as a result of under-pressure affected by the vent, which creates an airflow of the exhaust gases and non-exhaust gases. Alternatively, an additional vent can be used to force non-exhaust gas through one or more of the inlets.

According to some embodiments, the operation of one or more vents is determined or set for achieving the required properties of gases introduced to the ignition device and/or one or more of the filters. For example, the rate of operation of the vent can be increased to lowering the temperature of burned gasses being introduced to a filter, and/or to reduce the rate of burnable gases in the exhaust gas introduced to the ignition device.

As used herein, the term "non-exhaust gas" refers to a gas, such as fresh air or non-contaminated air, that is not yet mixed with exhausted materials from the battery under test.

According to some embodiments, the at least one ignition device comprises a first ignition device mounted adjacent to the battery test platform. According to some embodiments, the device or system includes one or more additional ignition devices, such as a second and third ignition device. According to some embodiments, one or more of the additional ignition devices is mounted adjacent to the first ignition device, thereby aiding in the combustion process at the same vicinity or at the same burning zone as the first ignition device.

According to some embodiments, one or more of the additional ignition devices is separated from the first ignition device and downstream thereto, so as to affect ignition to burnable gasses that were not ignited by the first ignition device, for example, an additional ignition device is placed downstream of a filter while the first ignition device is placed upstream of the filter.

According to some embodiments, the system or the device includes a hood structure affixed to a top portion of the test chamber, such that the filter and the vent are attached to the hood structure. The hood structure can form as a cover to the test chamber, where burned or unburned exhaust gasses are guided prior to being optionally further treated and then released from the test chamber.

Advantageously, a hood structure can facilitate fitting devices or systems according to the present disclosure in existing test facilities.

According to some embodiments, at least one ignition device is mounted to the hood structure. According to some embodiments, the ignition device mounted to the hood structure can provide ignition to gasses that have already, at least partially, combusted by a first ignition device, thereby affecting the combustion of unburned gasses, and mitigating the release of burnable gases from the test chamber.

According to some embodiments, the system or device includes an outlet pipe for guiding burned and/or filtered exhaust gases out of the test chamber. According to some embodiments, the outlet pipe comprises a safety flap mounted on a top portion thereof.

The safety flap operates to assure that gases are not trapped in the test chamber, especially when the vent is faulty or is not operated. When the vent is operated, the generated airflow forces the flap to a closed position against a safety outlet in the outlet conduit, thereby directing the air stream through a filter, then via the outlet conduit to an exhaust outlet in the hood structure. when the vent is not operated, the safety flap is released to an open position away from the safety outlet in the outlet conduit, thereby permitting a flow of exhaust gases through the safety outlet via the outlet conduit and through the exhaust outlet in the hood structure, bypassing a filter.

According to some embodiments, the test chamber comprises an air inlet configured to provide air from outside the test chamber into the test chamber. Advantageously, as the vent(s) generate a flow of gas to be exhausted outside the chamber, the air inlet permits clean uncontaminated gas to enter the test chamber.

According to the invention, at least one wall of the test chamber comprises a grid wall permeable to the passage of gas therethrough. The grid wall further comprises a fire-resistant screen covering at least part of the grid wall from an outer side thereof. Advantageously, in case of an outburst or explosion in the test chamber, the grid wall allows the release of pressure from the test chamber, while the fire-resistant screen mitigates the risk of fire propagation outside the test chamber and reduces the risk of fragments/debris being ejected out of the chamber due to the explosion.

According to some embodiments, the device or system further includes control electronics, configured to control the operation of the ignition devices and vents. Furthermore, in some embodiments, the control electronics further are connected to at least one sensor within the test chamber or the device. The at least one sensor is configured to provide a signal indicative of one or more of:
- A temperature in one or more locations or of one or more components in the device or in the system. For example, the temperature of gasses in the chamber, the temperature of gasses in the large-particle filter, the temperature of exhaust gases, the temperature of the battery under test, the temperature of gasses after the ignition device, or the like.
- Presence of burnable gases in one or more locations, such as, in the vicinity of the battery under test, in a general location within the chamber, in exhaust gases being released from the test chamber, or the like.
- Air pressure in the chamber, in one or more of the filters, in the outlet conduit, or the like.

According to some embodiments, the control electronics are configured to control the operation of one or more of the vents and/or the ignition devices based on signals received from the at least one sensor.

### Specific Embodiments

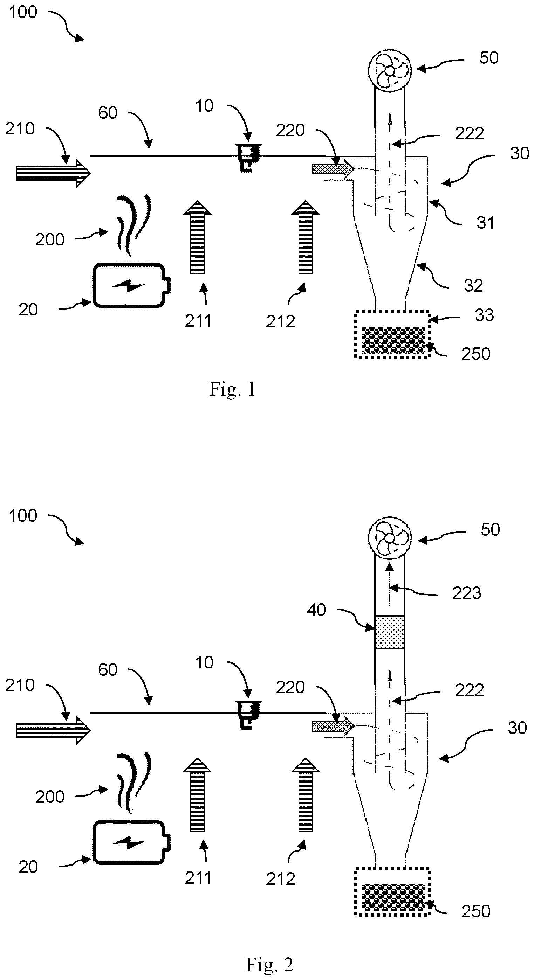

Reference is now made to Fig. 1, which illustrates a schematic functional view of a gas treatment device 100 including an ignition device 10 and a cyclone filter 30, according to an embodiment. The gas treatment device 100 is operable during a test procedure of a device under test, DUT, such as a battery 20. During the test procedures, for example in a thermal robustness test, certain reactions could occur in the battery 20 which produce exhaust gases 200. One such reaction is called thermal runaway, which occurs when a cell, or an area within a cell of the battery 20, reaches high temperatures due to a mechanical failure, a thermal failure, an electric short, a chemical reaction, or an electrochemical reaction.

A vent 50 in the device 100 operates to generate a gas flow, which directs the exhaust gases 200 to the ignition device 10. The ignition device 10, affects the combustion of the exhaust gasses 200 to burn them and generate burned exhaust gasses 220, which are then directed through the cyclone filter 30 for separating large particle contaminants from the burned exhaust gasses 220 to release filtered exhaust gases 222.

The cyclone filter 30 pulls in the burned exhaust gasses 220 to a cyclone body 31, in which the gas is forced into a vortex movement and through a conical section 32 of the cyclone filter 30. In the conical section 32, large particles are separated from the gas and fall by means of gravitational forces to a contaminants container 33 in which the collected contaminants 250 are collected.

The device 100 further includes gas guide 60 structures, which form a barrier and restricts the flow of gases in certain directions, particularly, creating a flow direction from the battery 20 to the ignition device 10 and into the cyclone filter 30. The gas guide 60 further facilitates introducing clean air 210, 211, 212 to be mixed with the exhaust gases at different locations along the flow path of the gas. Particularly, gas guide 60 facilitates introducing a first stream of clean air 210 and a second stream of clean air 211 to be mixed with the exhaust gases 200 prior to the introduction thereof to the ignition device 10.

Advantageously, such a mixture between clean air 210, 211 and exhaust gases 200 results in a mixture that would be ignited efficiently, such that a significant portion or all of the burnable gases in the exhaust gases 200 are burned.

The burned exhaust gases 220 can reach high temperatures that could damage the cyclone filter 30 or other components in the device 100. To mitigate this risk, a third stream of clean air 212 is introduced to be mixed with the burned exhaust gases 220 to reduce the temperature thereof.

The device 100, according to come embodiments, further includes at least one more ignition device 10.

Reference is now made to Fig. 2, which illustrates a schematic functional view of a gas treatment device 100 including an ignition device 10, and a cyclone filter 30, corresponding to the device 100 of Fig. 1, further including a fine-particle filter 40, according to another embodiment.

The fine-particle filter 40 is placed downstream of the cyclone filter 30 and is configured to receive coarse-filtered gases 222, to filter them further from fine particles, and to provide fine-filtered gases 223 to be released.

As illustrated, the fine-particle filter 40 is located along the path of the airflow between the cyclone filter 30 and the vent 50. However, in alternative embodiments, the fine-particle filter 40 can be placed after, or downstream to the vent 50.

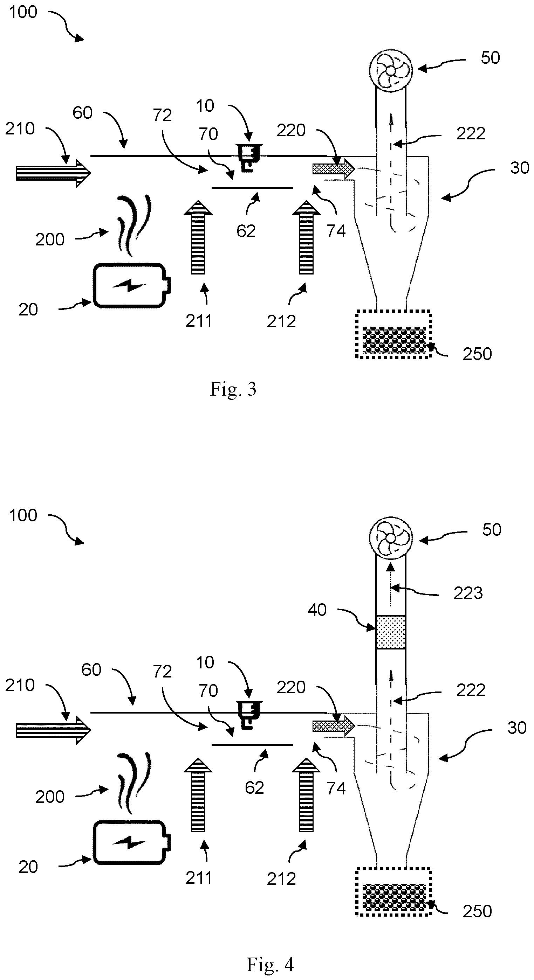

Reference is now made to Fig. 3, which illustrates a schematic functional view of a gas treatment device 100 including an ignition device 10, and a cyclone filter 30, corresponding to the device 100 of Fig. 1, and further including a combustion barrier 62, according to another embodiment.

The combustion barrier 62 is placed opposite to a portion of the gas guide 60 or could be formed as an integrated part with the gas guide 60, and is configured to physically define a burning zone 70, in which the combustion of exhaust gases 200 is performed by the ignition device 10.

Advantageously, the burning zone 70 limits the impact of the combustion on other components of the device 100, and further defines the flow path of exhaust gases 200.

The combustion barrier 62 defines a first gas inlet 72, in which the exhaust gases 200, the first stream of clean air 210, and the second stream of clean air 211 are mixed and introduced to the burning zone 70. The combustion barrier 62 further defines a second gas inlet 74, through which, a third stream of clean air 212 is provided and mixed with the burned exhaust gases 220 before entering the cyclone filter 30.

Reference is now made to Fig. 4, which illustrates a schematic functional view of a gas treatment device 100 including an ignition device 10, a cyclone filter 30, a fine particle filter 40, and a combustion barrier 62, according to another embodiment.

The device 100 of Fig. 4 corresponds to device 100 of Fig. 3 and further includes a fine-particle filter 40 as a secondary filter after the cyclone filter 30.

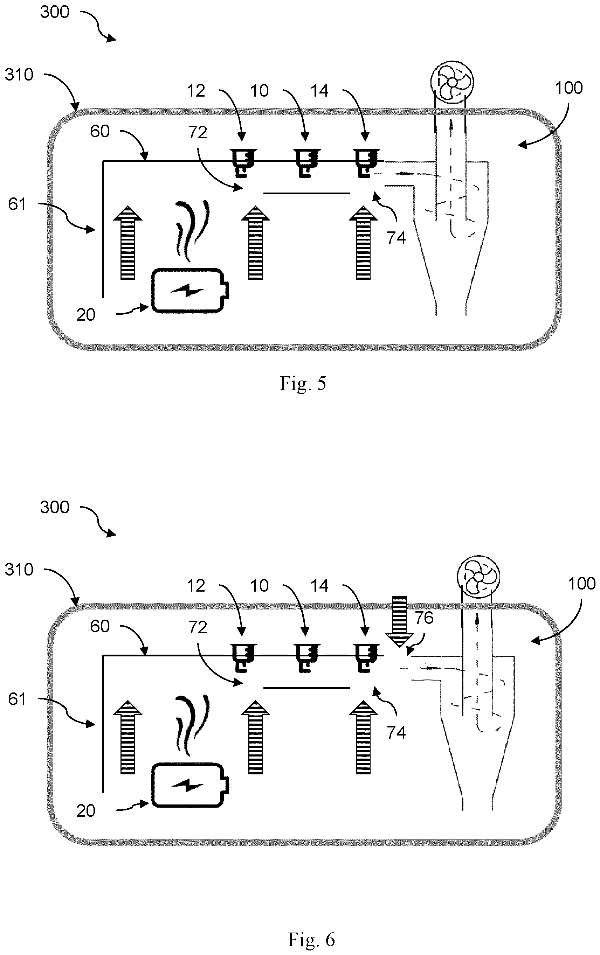

Reference is now made to Fig. 5, which illustrates a schematic functional view of a battery test setting 300 with a gas treatment device 100 placed on a test platform 310, according to another embodiment.

The gas treatment device 100 corresponds to the device of Fig. 1 to Fig. 4, and further includes an illustration of a second ignition device 12 and a third ignition device 14 placed in the vicinity of the ignition device 10, and configured to affect efficient combustion of the burned gases in the exhaust gases 200.

According to some embodiments, the relative placement of the ignition devices 10, 12, 14 is along the flow of gas, such as gas which flows in the path affected by the vent 50 is introduced to the ignition devices 10, 12, 14 in serial. Alternatively, according to some embodiments, the relative placement of the ignition devices 10, 12, 14 is perpendicular to the flow of gas.

The device 100 further includes an extension 61 of the gas guide 60, configured to further define the flow of gas affected by the operation of the vent 50, and limit the escape of exhaust gases 200 from the device 100.

The battery 20 is placed on the test platform 310 for performing a test procedure, such that the gas guide 60 and extension 61 confine a surrounding of the battery 20, at least from one side thereof.

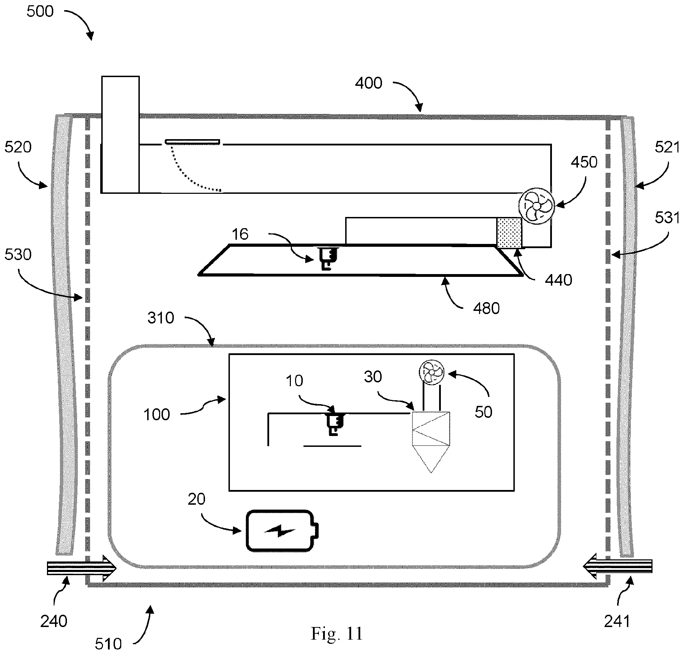

According to some embodiment, the test platform 310 is raised above the floor of the test chamber 510 (refer to Fig. 11), thereby facilitating convenient access to operate the test equipment. Alternatively, in some embodiments, the test platform 310 is placed on the floor of the test chamber 510, thereby facilitating test procedures for large batteries.

Reference is now made to Fig. 6, which illustrates a schematic functional view of a battery test setting 300 with a gas treatment device 100 placed on a test platform 310, corresponding to the test platform 310 of Fig. 5, wherein the cyclone filter 30 is spaced apart from the ignition device(s) 10 12 14, according to an embodiment.

Advantageously, the test platform 310 allows placing the cyclone filter 30 and the ignition device 10, 12, 14 with space in between, to allow for further openings, such as an inlet 76 to introduce greater volumes of clean air 210, 211, 212 before the burned exhaust gases 220 are forced into the cyclone filter 30.

According to some embodiments, the system includes a hood structure 400, configured to cover a top portion of a test chamber 510.

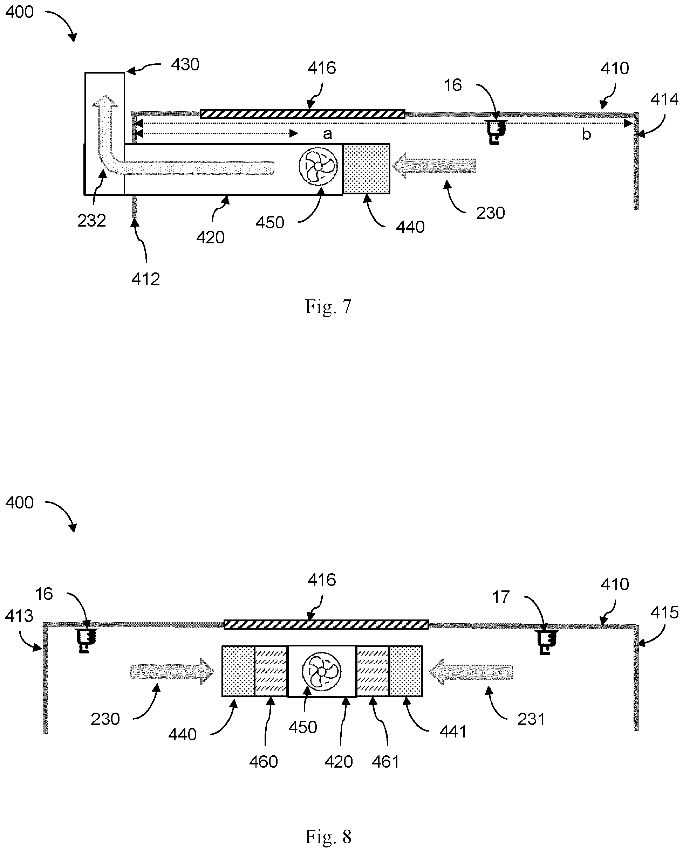

Reference is now made to Fig. 7, which illustrates a schematic functional view of a hood structure 400, according to an embodiment.

The hood structure 400 includes a hood cover 410 and side panels 412, 414 with dimensions corresponding to a test chamber 510 on which the hood structure 400 is to be operable.

The hood structure 400 includes an outlet conduit 420 and a vent 450 configured to force burnt exhaust gases 230 through a fine-particle filter 440 then via the outlet conduit 420 for being released through a gas outlet 430.

The hood structure 400 further includes an ignition device 16, which is located upstream of the fine-particle filter 440, and configured to affect combustion to exhaust gases prior to reaching the fine-particle filter 440.

According to some embodiments, the hood structure 400 is operable in combination with a test device 100 or a test platform 310, such that the ignition device 16 is a secondary ignition device which would affect a combustion to burnable gases that were not combusted in the device 100.

The hood cover 410 further includes a service door 416 for allowing access to the various components of the hood structure 400 during maintenance operations.

According to some embodiments, the hood structure 400 has a length 'b' of 2400 mm, and a similar width. According to some embodiments, the distance 'a' between the vent 450 and a side panel 412 is approximately 410 mm.

Reference is now made to Fig. 8, which illustrates a schematic cross-section of a hood structure 400 corresponding to the hood structure 400 of Fig 7, according to an embodiment.

The hood structure 400 includes a hood cover 410 with a sevice door 416, side panels 413, 415, a first fine-particle filter 440 and a second fine-particle filter 441 arranges at opposite sides of the vent 450 and facilitate passage of burned exhaust gases 230, 231 therethrough. Advantageously, introducing more than one fine-particle filter 440, 441 in the system reduces the airflow resistance and allows for greater rates of airflow.

The hood structure 400 further includes filter maintenance covers 460, 461 to allow access to the filters 440, 441 during maintenance operations.

To mitigate the risk of burnable gases escaping the test chamber 510, more than one ignition device are used 16, 17 at different positions in the hood structure 400, corresponding to the flow path of the exhaust gases 230, 231.

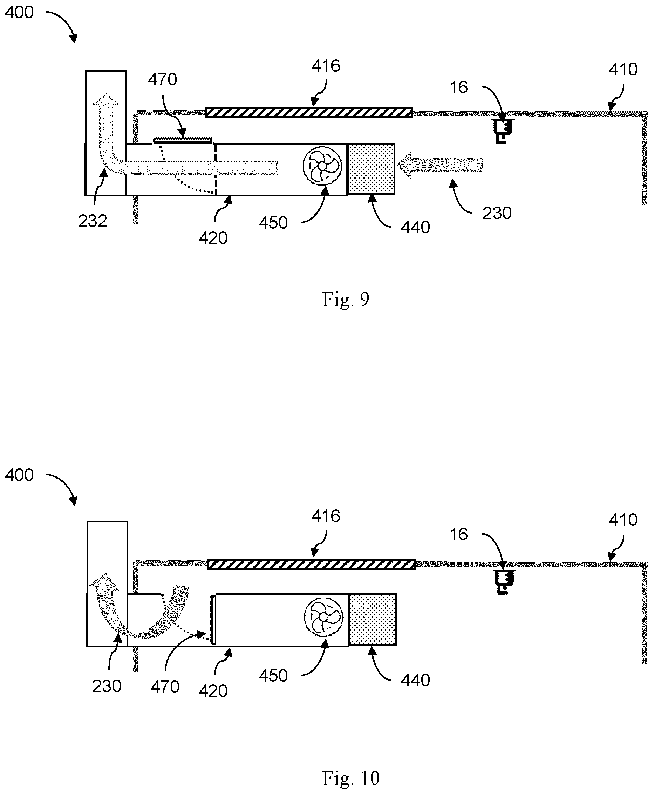

Reference is now made to Fig. 9 and Fig. 10, which illustrates a schematic functional view of a hood structure 400, corresponding to the hood structure 400 of Fig. 7 and Fig. 8, with a safety flap 470, according to an embodiment.

The safety flap 470 is installed on the outlet conduit 420, and configured to facilitate the release of exhaust gases from the test chamber 510, even if the vent 450 is not operated or malfunctioned.

As illustrated in Fig. 9, under a normal operation of the vent 450, the stream of exhaust gases 232 pushes against the safety flap 470 to raise it for closing a safety opening in the outlet conduit 420, thereby allowing for the exhaust gases 232 that have passed through the fine-particle filter 440 to be released.

As illustrated in Fig. 10, in a case where the vent 450 is not operating properly or malfunctioning, a risk of exhaust gas accumulation in the test chamber 510 might occur. In such a case, as the vent 450 is not generating a stream of gas to push against the safety flap 470, the safety flap 470 is released by gravitational force to open a safety opening in the outlet conduit 420 and allow for exhaust gases 230 to be released without passing through the fine-particle filter 440.

Reference is now made to Fig. 11, which illustrates a schematic view of a battery testing system 500, according to an embodiment.

The battery testing system 500 includes a test chamber 510, in which test procedures for batteries 20 can take place.

The battery testing system 500 includes a test platform 310 corresponding to the test platform 310 of Fig. 5 and Fig. 6 located in the test chamber 510, with a gas treatment device 100 corresponding to Fig. 1 to 4, for performing a test procedure on a battery 20.

Furthermore, the battery testing system 500 includes a hood structure 400 corresponding to Fig. 7 to 10, further including a gas collector 480 for collecting exhaust gases and guiding them through the fine-particle filter 440 to be released. The ignition device 16 is mounted on the gas collector 480 for affecting combustion to burnable gases prior to reaching the fine-particle filter 440.

A first wall 530 and a second wall 531 of the chamber 510 are grid walls and covered from the outer side thereof with a first screen 520 and a second screen 521 respectively. The screens 520, 521 are fire-resistant and hand from the top of the walls 530, 531.

Preferably the screens 520, 521 are shorter than the walls 530, 531, such that bottom portions of the walls 530, 531 are not covered and provide chamber air inlets 240, 241 to introduce clean air 210, 211, 212 to the chamber 510.

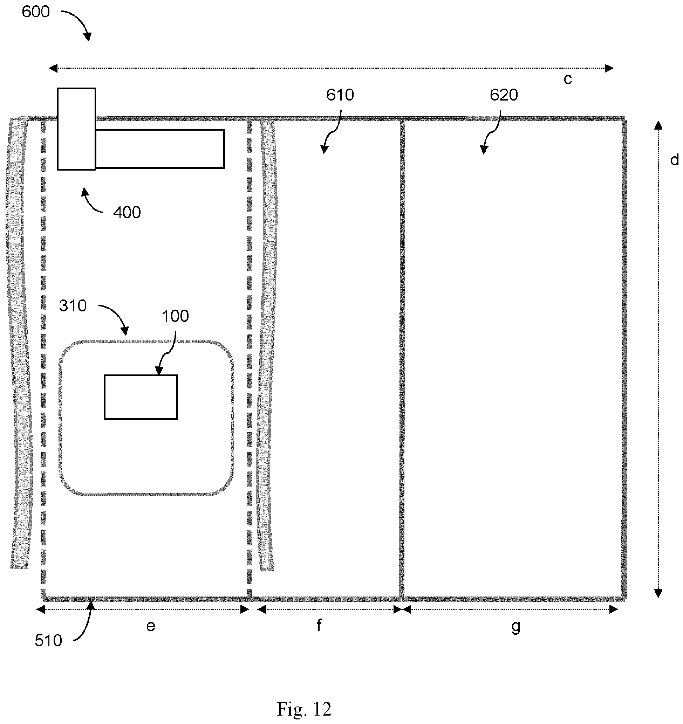

Reference is now made to Fig. 12, which illustrates a schematic view of a battery testing facility 600, according to an embodiment.

The test facility 600 has the dimensions of a 20 feet container, which includes a test chamber 510 corresponding to the test chamber 510 of Fig. 11 to perform test procedures on batteries.

The testing facility 600 further includes a control/operation room 620, in which an operator can monitor and/or control the battery test procedure, and a safety room 610 between the test chamber 510 and the control room 620 to distance the control room 620 from the test chamber 510 and form a buffer to mitigate the risk for damage to the control room 620.

The height 'd' of the testing facility 600 is approximately 2960 mm, the length 'c' of the test facility is approximately 6055 mm, and the depth of the testing facility 600 is approximately 2435 mm.

The length 'e' of the test chamber 510 is approximately 2.5 m, the length 'f' of the safety room 610 is approximately 1.5 m, and the length of the control room 620 is approximately 2 m.

Advantageously, the dimensions of the testing facility 600 facilitate standard shipping, as they correspond to the dimensions of a standard 20 feet container.

## Claims

1. A battery testing system (500), comprising:
a test chamber (510);
a battery test platform (310) positioned within the test chamber (510), the battery test platform (310) is configured to accommodate a battery (20) under test and to facilitate performing a battery test; and
at least one ignition device (10, 12, 14, 16, 17), configured to affect combustion of exhaust gases (200) produced in the test chamber (510) during the battery test, while the exhaust gasses (200) are in the battery testing system (500),
**characterized in that** at least one wall (530, 531) of the test chamber (510) comprises a grid wall and the battery testing system (500) further comprises a fire-resistant screen (520, 521) covering at least part of the grid wall from an outer side thereof.

2. The battery testing system (500) of claim 1, further comprising:
at least one filter (30, 40, 440, 441) configured for removing contaminants from exhaust gasses (200) passing therethrough; and
a vent (50, 450) configured to direct exhaust gasses (200) through the filter (30, 40, 440, 441), affecting a directed air stream wherein a downstream direction is a direction in which air is guided through the filter (30, 40, 440, 441),
wherein the at least one filter (30, 40, 440, 441) is placed downstream of the at least one ignition device (10, 12, 14, 16, 17), such that the at least one ignition device (10, 12, 14, 16, 17) is configured to affect the combustion of exhaust gases (200) prior to the exhaust gases being directed through the at least one filter (30, 40, 440, 441).

3. The battery testing system (500) of claim 2, wherein the at least one filter (30, 40, 440, 441) comprises a cyclone filter (30) placed adjacent to and downstream of the at least one ignition device (10, 12, 14, 16, 17).

4. The battery testing system (500) of claim 3, wherein the at least one filter (30, 40, 440, 441) further comprises a fine-particle filter (40, 440, 441) placed downstream of the cyclone filter (30) and configured to filter contaminants from exhaust gasses (200) which passed through the cyclone filter (30).

5. The battery testing system (500) of any of the claims 1 to 4, further comprising at least one of:
a first gas inlet (72), configured to introduce non-exhaust gases to the exhaust gases (200) prior to the combustion, and
a second gas inlet between (74) the at least one ignition device (10, 12, 14, 16, 17) and the filter (30, 40, 440, 441), configured to introduce non-exhaust gases to exhaust gases after the combustion thereof and prior to the combusted exhaust gases (220) being directed through the at least one filter (30, 40, 440, 441).

6. The battery testing system (500) of any of claims 2 to 5, wherein the at least one ignition device (10, 12, 14, 16, 17) comprises a first ignition device (10, 12, 14, 16, 17) mounted adjacent to the battery test platform (310).

7. The battery testing system (500) of any of the claims 2 to 6, further comprising a hood structure (400) affixed to a top portion of the test chamber (510), such that the filter (30, 40, 440, 441) and the vent (50, 450) are attached to the hood structure (400).

8. The battery testing system (500) of claim 7, wherein the at least one ignition device (10, 12, 14, 16, 17) comprises a second ignition device (10, 12, 14, 16, 17) mounted on the hood structure (400).

9. The battery testing system (500) of any of claims 7 and 8, wherein the hood structure (400) further comprises a safety flap (470) mounted on a top portion of the hood structure (400), such that:
when the vent (50, 450) is operated, the generated air stream forces the safety flap (470) to a closed position against a safety outlet in the hood structure (400), thereby directing the air stream to a gas outlet (430) in the hood structure (400); and
when the vent (50, 450) is not operated, the safety flap (470) is released to an open position away from the safety outlet in the hood structure (400), thereby permitting a flow of exhaust gases through the safety outlet in the hood structure (400),
wherein the test chamber (510) comprises an air inlet (240, 241) configured to provide air from outside the test chamber (510) into the test chamber (510).

10. A method for exhaust gas treatment in a battery testing system (500) as defined in claim 1, the method comprising the steps of:
introducing a battery (20) under test in a test chamber (510);
performing a battery test procedure on the battery (20) under test;
igniting exhaust gases produced during the battery test procedure to affect combustion thereof;
guiding the combusted gases through a filter (30, 40, 440, 441); and
filtering pollutants from the guided combusted gases,
**characterized in that** at least one wall (530, 531) of the test chamber (510) comprises a grid wall and the test chamber (510) comprises a fire-resistant screen (520, 521) covering at least part of the grid wall from an outer side thereof.

## Patentansprüche

1. System (500) zur Batterieprüfung, umfassend:
eine Prüfkammer (510);
eine innerhalb der Prüfkammer (510) angeordnete Batterieprüfplattform (310), wobei die Batterieprüfplattform (310) dazu ausgestaltet ist, eine zu prüfende Batterie (20) aufzunehmen und das Durchführen einer Batterieprüfung zu erleichtern; und
wenigstens eine Zündvorrichtung (10, 12, 14, 16, 17), die dazu ausgestaltet ist, die Verbrennung von Abgasen (200), welche während der Batterieprüfung in der Prüfkammer (510) erzeugt werden, zu bewirken, während sich die Abgase (200) im System (500) zur Batterieprüfung befinden,
**dadurch gekennzeichnet, dass** wenigstens eine Wand (530, 531) der Prüfkammer (510) eine Gitterwand umfasst und das System (500) zur Batterieprüfung ferner eine feuerfeste Abschirmung (520, 521) umfasst, die wenigstens einen Teil der Gitterwand von einer Außenseite derselben aus bedeckt.

2. System (500) zur Batterieprüfung nach Anspruch 1, ferner umfassend:
wenigstens ein Filter (30, 40, 440, 441), das dazu ausgestaltet ist, aus den Abgasen (200), die es passieren, Verunreinigungen zu entfernen; und
eine Entlüftung (50, 450), die dazu ausgestaltet ist, die Abgase (200) durch das Filter (30, 40, 440, 441) zu leiten, wodurch eine gerichtete Luftströmung bewirkt wird, wobei eine Stromabwärtsrichtung eine Richtung ist, in die Luft durch das Filter (30, 40, 440, 441) geführt wird,
wobei das wenigstens eine Filter (30, 40, 440, 441) stromabwärts von der wenigstens einen Zündvorrichtung (10, 12, 14, 16, 17) angeordnet ist, sodass die wenigstens eine Zündvorrichtung (10, 12, 14, 16, 17) ausgestaltet ist, um die Verbrennung von Abgasen (200) zu bewirken, bevor die Abgase durch das wenigstens eine Filter (30, 40, 440, 441) geleitet werden.

3. System (500) zur Batterieprüfung nach Anspruch 2, wobei das wenigstens eine Filter (30, 40, 440, 441) ein Zyklonfilter (30) umfasst, das benachbart zu und stromabwärts von der wenigstens einen Zündvorrichtung (10, 12, 14, 16, 17) angeordnet ist.

4. System (500) zur Batterieprüfung nach Anspruch 3, wobei das wenigstens eine Filter (30, 40, 440, 441) ferner ein Feinpartikelfilter (40, 440, 441) umfasst, das stromabwärts vom Zyklonfilter (30) angeordnet und dazu ausgestaltet ist, Verunreinigungen aus den Abgasen (200), die das Zyklonfilter (30) passiert haben, herauszufiltern.

5. System (500) zur Batterieprüfung nach einem der Ansprüche 1 bis 4, ferner wenigstens eines aus folgenden umfassend:
einen ersten Gaseinlass (72), der dazu ausgestaltet ist, vor der Verbrennung Nicht-Abgase in die Abgase (200) einzubringen, und
einen zweiten Gaseinlass (74) zwischen der wenigstens einen Zündvorrichtung (10, 12, 14, 16, 17) und dem Filter (30, 40, 440, 441), der dazu ausgestaltet ist, nach dem Verbrennen von Abgasen und bevor die verbrannten Abgase (220) durch das wenigstens eine Filter (30, 40, 440, 441) geleitet werden, Nicht-Abgase in die Abgase einzubringen.

6. System (500) zur Batterieprüfung nach einem der Ansprüche 2 bis 5, wobei die wenigstens eine Zündvorrichtung (10, 12, 14, 16, 17) eine erste Zündvorrichtung (10, 12, 14, 16, 17), die benachbart zur Batterieprüfplattform (310) montiert ist, umfasst.

7. System (500) zur Batterieprüfung nach einem der Ansprüche 2 bis 6, ferner umfassend eine Haubenstruktur (400), die auf einem oberen Abschnitt der Prüfkammer (510) angebracht ist, sodass das Filter (30, 40, 440, 441) und die Entlüftung (50, 450) auf der Haubenstruktur (400) befestigt sind.

8. System (500) zur Batterieprüfung nach Anspruch 7, wobei die wenigstens eine Zündvorrichtung (10, 12, 14, 16, 17) eine zweite Zündvorrichtung (10, 12, 14, 16, 17), die auf der Haubenstruktur (400) montiert ist, umfasst.

9. System (500) zur Batterieprüfung nach einem der Ansprüche 7 und 8, wobei die Haubenstruktur (400) ferner eine Sicherheitsklappe (470) umfasst, welche auf einem oberen Abschnitt der Haubenstruktur (400) montiert ist, sodass:
wenn die Entlüftung (50, 450) betrieben wird, die erzeugte Luftströmung die Sicherheitsklappe (470) gegen einen Sicherheitsauslass in der Haubenstruktur (400) in eine geschlossene Position drückt, wodurch die Luftströmung zu einem Gasauslass (430) in der Haubenstruktur (400) geleitet wird; und
wenn die Entlüftung (50, 450) nicht betrieben wird, die Sicherheitsklappe (470) in eine offene Position weg vom Sicherheitsauslass in der Haubenstruktur (400) freigegeben wird, wodurch ein Strömen von Abgasen durch den Sicherheitsauslass in der Haubenstruktur (400) ermöglicht wird,
wobei die Prüfkammer (510) einen Lufteinlass (240, 241) umfasst, der dazu ausgestaltet ist, Luft von außerhalb der Prüfkammer (510) in die Prüfkammer (510) zuzuführen.

10. Verfahren zur Abgasbehandlung in einem System (500) zur Batterieprüfung wie in Anspruch 1 definiert, wobei das Verfahren folgende Schritte umfasst:
Einbringen einer zu prüfenden Batterie (20) in eine Prüfkammer (510);
Durchführen eines Batterieprüfverfahrens an der zu prüfenden Batterie (20);
Entzünden von Abgasen, die während des Batterieprüfverfahrens erzeugt werden, um ein Verbrennen derselben zu bewirken;
Führen der verbrannten Gase durch ein Filter (30, 40, 440, 441); und
Herausfiltern von Schadstoffen aus den geführten verbrannten Gasen,
**dadurch gekennzeichnet, dass** wenigstens eine Wand (530, 531) der Prüfkammer (510) eine Gitterwand umfasst und die Testkammer (510) eine feuerfeste Abschirmung (520, 521) umfasst, die wenigstens einen Teil der Gitterwand von einer Außenseite derselben aus bedeckt.

## Revendications

1. Système de test de batterie (500), comprenant :
une chambre de test (510) ;
une plate-forme de test de batterie (310) positionnée dans la chambre de test (510), la plate-forme de test de batterie (310) est configurée pour accueillir une batterie (20) en cours de test et pour faciliter l'exécution d'un test de batterie ; et
au moins un dispositif d'ignition (10, 12, 14, 16, 17), configuré pour affecter la combustion des gaz d'échappement (200) produits dans la chambre de test (510) pendant le test de batterie, alors que les gaz d'échappement (200) se trouvent dans le système de test de batterie (500),
**caractérisé en ce qu'**au moins une paroi (530, 531) de la chambre de test (510) comprend une paroi grillagée et le système de test de batterie (500) comprend en outre un écran résistant au feu (520, 521) couvrant au moins une partie de la paroi grillagée à partir d'un côté extérieur de celle-ci.

2. Système de test de batterie (500) selon la revendication 1, comprenant en outre :
au moins un filtre (30, 40, 440, 441) configuré pour éliminer les contaminants des gaz d'échappement (200) qui le traversent ; et
un évent (50, 450) configuré pour acheminer les gaz d'échappement (200) à travers le filtre (30, 40, 440, 441), affectant un flux d'air acheminé dans lequel une direction aval est une direction dans laquelle l'air est guidé à travers le filtre (30, 40, 440, 441),
dans lequel l'au moins un filtre (30, 40, 440, 441) est placé en aval de l'au moins un dispositif d'ignition (10, 12, 14, 16, 17), de sorte que l'au moins un dispositif d'ignition (10, 12, 14, 16, 17) est configuré pour affecter la combustion des gaz d'échappement (200) avant que les gaz d'échappement ne soient acheminés à travers l'au moins un filtre (30, 40, 440, 441).

3. Système de test de batterie (500) selon la revendication 2, dans lequel au moins un filtre (30, 40, 440, 441) comprend un filtre cyclone (30) placé à côté et en aval de l'au moins un dispositif d'ignition (10, 12, 14, 16, 17).

4. Système de test de batterie (500) selon la revendication 3, dans lequel l'au moins un filtre (30, 40, 440, 441) comprend en outre un filtre à particules fines (40, 440, 441) placé en aval du filtre cyclone (30) et configuré pour filtrer les contaminants des gaz d'échappement (200) qui ont traversé le filtre cyclone (30).

5. Système de test de batterie (500) selon l'une quelconque des revendications 1 à 4, comprenant en outre au moins l'un parmi :
un premier orifice d'admission des gaz (72), configuré pour introduire des gaz autres que les gaz d'échappement dans les gaz d'échappement (200) avant la combustion, et
un second orifice d'admission des gaz entre (74) l'au moins un dispositif d'ignition (10, 12, 14, 16, 17) et le filtre (30, 40, 440, 441), configuré pour introduire des gaz autres que les gaz d'échappement dans les gaz d'échappement après leur combustion et avant que les gaz d'échappement brûlés (220) ne soient acheminés à travers l'au moins un filtre (30, 40, 440, 441).

6. Système de test de batterie (500) selon l'une quelconque des revendications 2 à 5, dans lequel l'au moins un dispositif d'ignition (10, 12, 14, 16, 17) comprend un premier dispositif d'ignition (10, 12, 14, 16, 17) monté à côté de la plate-forme de test de batterie (310).

7. Système de test de batterie (500) selon l'une quelconque des revendications 2 à 6, comprenant en outre une structure de capot (400) fixée à une partie supérieure de la chambre de test (510), de sorte que le filtre (30, 40, 440, 441) et l'évent (50, 450) sont fixés à la structure de capot (400).

8. Système de test de batterie (500) selon la revendication 7, dans lequel l'au moins un dispositif d'ignition (10, 12, 14, 16, 17) comprend un second dispositif d'ignition (10, 12, 14, 16, 17) monté sur la structure de capot (400).

9. Système de test de batterie (500) selon l'une quelconque des revendications 7 et 8, dans lequel la structure de capot (400) comprend en outre un volet de sécurité (470) monté sur une partie supérieure de la structure de capot (400), de sorte que :
lorsque l'évent (50, 450) est actionné, le flux d'air généré force le volet de sécurité (470) à se fermer contre une sortie de sécurité dans la structure de capot (400), dirigeant ainsi le flux d'air vers un orifice de sortie des gaz (430) dans la structure de capot (400) ; et
lorsque l'évent (50, 450) n'est pas actionné, le volet de sécurité (470) est libéré en position ouverte, à distance de l'orifice de sortie de sécurité de la structure de capot (400), permettant ainsi un écoulement des gaz d'échappement par l'orifice de sortie de sécurité de la structure de capot (400),
dans lequel la chambre de test (510) comprend une entrée d'air (240, 241) configurée pour fournir de l'air de l'extérieur de la chambre de test (510) dans la chambre de test (510).

10. Procédé de traitement des gaz d'échappement dans un système de test de batterie (500) selon la revendication 1, le procédé comprenant les étapes consistant à :
introduire une batterie (20) sous test dans une chambre de test (510) ;
réaliser une procédure de test de batterie sur la batterie (20) sous test ;
enflammer les gaz d'échappement produits au cours de la procédure de test de la batterie afin d'en affecter la combustion ;
guider les gaz brûlés à travers un filtre (30, 40, 440, 441) ; et filtrer les polluants des gaz brûlés guidés,
**caractérisé en ce qu'**au moins une paroi (530, 531) de la chambre de test (510) comprend une paroi grillagée et la chambre de test (510) comprend un écran résistant au feu (520, 521) couvrant au moins une partie de la paroi grillagée à partir d'un côté extérieur de celle-ci .
